# EUROPEAN PATENT SPECIFICATION

(11) **EP 2 647 936 B1**
(45) Date of publication and mention of the grant of the patent: **03.06.2015**
(21) Application number: 13162336.5
(22) Date of filing: 04.04.2013
(51) Int. Cl.: F26B 25/10

(54) **Device for subjecting products to a gas flow, for example, for a dry or freeze process.**
Vorrichtung zur Aussetzung von Produkten in einem Gastrom, zum Beispiel für ein Trocknungs- und Gefrierverfahren
Dispositif pour soumettre des produits à un écoulement gazeux pour, par exemple, un processus de congélation ou de séchage

(30) Priority: 05.04.2012 NL 2008611
(43) Date of publication of application: 09.10.2013
(73) Proprietor: Mooij Agro B.V., 5963 AC Hegelsom (NL)
(72) Inventor: Mooij, Maarten, 3481 EH HARMELEN (NL)
(74) Representative: Algemeen Octrooi- en Merkenbureau B.V.

(56) References cited:
- WO-A1-98/48855
- JP-A- 59 032 781
- US-A- 4 312 139

## Description

The present invention relates to a device for subjecting products to a gas flow, for example, for a dry or freeze process, which device comprises a lower and upper grid, which are positioned parallel at a certain distance from each other, which lower and upper grids are comprised of a large amount of gas flow passages on which, during operation the products subject to the gas flow, are to be positioned on the top grid; a plurality of balls, which balls can move freely between the lower and upper grid, as well as a gas flow generating means for generating the gas flow and for providing the gas flow through the lower and upper grid towards the products.

A device according to the description above can be used to dry or freeze a product with use of a gas flow such as air for example. Herewith moisture can be removed from the products and/or the temperature of the product can be increased or reduced. The disadvantage of such a known device is that a large amount of gas needs to be displaced in order to achieve the desired end result, for example for the purpose of preservation by lowering the moisture content. Such known devices therefor have a lower throughput (pass-through speed) of (food) products to be processed, a higher energy consumption and substantial structural dimensions.

When preserving food and other perishable products such a seeds there often is a need for a shortest possible time to extract moisture from the product. Speed is hereby positively related to the quality and durability of the products. In addition, speed is required for realizing a high throughput of the products, and thus for increasing the processing capacity of the device. To this end, products in these known devices are subject to large amounts of gas streams, which is not only a disadvantage from an energy management perspective, but also gas flow generating means are required with an oversized capacity and construction.

A known possibility to increase the throughput time, is to arrange the products in the device in a certain correct manner, such that they are positioned at a certain distance from each other and do not overlap or cover each other. Thereby a large part of the surface of the individual products is subject to the gas flow.

A device arranged accordingly, is for example known from GB 931888. Herein balls are used which, under the influence of a gas flow, make the grid vibrate, which grid is provided with airway passages. On this grid the to be dried products are arranged. Because of the vibration the products are distributed more uniform over the grid and hence resulting in a better uniform gas flow along the to be dried products.

This device however, has a disadvantage that at placed in the grid where no products are arranged, the gas flow is experiencing little or no resistance at all. Thus, the gas flow at these low resistance position will be greater and accordingly do add to the drying of the to be dried products since there is no contact with the gas flow. This results in non-optimal gas flow usage, an increased gas and energy consumption and a lower throughput since the products require a longer period of time to be subject to the gas flow in order to obtain the desired moisture level.

The document WO 98/48855 A1 describes a dryer appliance having a double grid beneath the products and a granular desiccant material between the grids. The diameter of the grains of the granular material is much smaller than the distance between the two grids.

An object of the present invention is therefore to provide a device, in which products are subject to an improved gas flow, with device has at least one of a a shorter lead time (higher throughput), lower energy consumption and less gas usage and, consequently, smaller structural dimensions.

The abovementioned object is achieved according to the invention in that the distance between the lower and upper grid is substantially equal to the diameter of the balls, in such a way that the balls are arranged between the grids in a single layer.

An advantage of the device according to the present invention is that it increases the gas flow at locations on the grid where no products are present with respect to the places where there are products present on the top grid. This is because of the fact that at places where there are no products on the grid are present, the passage openings of the grid are closed off by the balls that act as a single layer between the two grids.

Because the balls are arranged, or locked in, in a single layer between the lower and upper grid, the balls can not, or can hardly re-orientate between the both grids. Because the gas flow, in principle chooses the path of the lowest resistance, and flows in the direction of the airway passages on which no products are arranged, these free airway passages are at least partly closed by the balls. The gas flow is thus forced to flow through the openings in which the products to be treated are located, because the resistance is lower there than at the openings blocked by the balls. Hence, the gas flow for treating the products is used in a more efficient manner. Because the balls are locked between the both grids as a single layer, these balls can not, as they move in state of the art devices, move in a chaotic manner, and it is prevented that gas is not used for processing the products.

Preferably the balls have a diameter which is larger than the passage openings. Furthermore the shape of the passage openings is equal to the circumference of the balls, namely ellipse shaped, or circular. In an alternative embodiment these through holes of at least the top grid can also be rectangular. Thus, for example in the case the grid has a mesh shaped grading provided with square shaped passages. When a ball abuts a through hole, i.e. gas passage, which is round, the ball will at least substantially close the opening. In case of a square shaped through hole the ball can close the opening partially, then there is at least always some residual airflow that escapes through the opening. This is the case during the switched off state of the device, in which the balls of the openings of the lower grid are closed, as well as in an active mode wherein there is an active gas flow, in which the balls close the openings in the upper grid.

In a first embodiment, there are fewer balls provided between the two grids then there are passages openings in the grid. As a result not the entire surface of the two grids is taken up by the single layered balls. The balls can in the horizontal plane therefore, although limited, move freely and may therefore re-orientate during operation and, depending on the orientation of the products to be treated on the upper grid, close-off a free passage in the upper grid.

In case products are positioned on the top grid which need to be dried, and in case the gas flow is activated, the balls will re-orientate under the influence of the path of the lowest resistance, such that the balls that are present below a part of the top grid on which products are present will move towards a position below the grid on which there are no products present, and will close or at least partially close the openings of the upper grid there. As a result the gas flow at those locations in which a ball closes or at least partially closes off an opening and above which no product is present, is forced to flow towards openings above which a product is present. In such a way an improved gas flow is achieved with a more efficient use of gas during the treatment of products with a gas treatment.

Thus the balls are to be arranged as a single layer between the two grids and are only to a small extend movable in horizontal, as well as in vertical direction, for efficiently blocking at least some of the through holes/openings and to improve the gas flow in the direction of the products to be processed, such as the seeds. The distance between the two grids is at least substantially equal to or only slightly larger than diameters of the balls, in such a way that the balls at least have a minimum of freedom of movement in order to re-orientate in horizontal and vertical direction in dependence of the gas flow through the both grids and the orientation of the products arranged on the top grid.

The distance between the two grids is preferably less than twice the diameter of the balls, such that the balls do not have enough freedom to form in a double layer of balls between the two grids.

Preferably, the device is **characterized in that** the number of through holes, i.e. gas flow passages, in the upper grid is equal to the numbers of balls between the grids. Each passage in the grids can be closed by an individual corresponding ball. The case there are products arranged on the upper grid, and the gas flow is initiated, those balls in which the corresponding passage opening do not have a product arranged thereon, it closes the passage opening. For those balls for which the corresponding openings do have a product arranged thereon, the balls will be present between the top and lower grid enabling the gas flow to pass along the balls, through the openings towards the products.

As a result, the gas flow will decrease at those locations on the grid without products arranged thereon, and increase at locations on which there are products arranged. Accordingly, an improved and efficient flow of gas according to the invention is obtained.

According to a particular embodiment of the invention, the device is **characterized in that** it further comprises a heating element or a cooling element for cooling or heating the gas flow. In this embodiment products can for example, be heated thereby extracting moisture from the products. In a different embodiment the device is provided with means to cool the gas flow in order to decrease the temperature of the products with the cool gas flow. In a particular embodiment this temperature is below 0°C.

In another embodiment, the products are movable over the top grid in the form of a product flow. In such an embodiment the products are not statically present on the upper grid. The grid can in such an embodiment be provided as a conveyor belt, wherein the conveyor belt is provided with the gas passage openings which can be closed off by the balls. The conveyor belt realizes a constant flow of products horizontally through the device for the benefit of a continues drying or freezing process.

In a different embodiment, the device is characterized by a control unit for controlling the gas flow. In a further embodiment the control unit is arranged to, in dependence of the product stream, control the gas flow. In such a way the device can be set to any desired condition of drying or freezing and can therefore use different gas flows for different product.

Also, in accordance with the invention, the device may comprise means for determining product properties in order for setting the speed of the airflow. Amongst others, desired final moisture level, temperature, weight and the like are examples of to be determined product properties on the basis of which the control unit controls the gas flow, or the speed of the conveyer belt. This has the advantage that a quality assurance check can be made on the final product.

In yet another embodiment, the gas flow comprises air, oxygen, nitrogen, hydrogen, or a combination thereof.

The invention will now be explained in more detail with reference to the figures, which figures successfully show in:
Figure 1 a first embodiment of a device according to the invention in non-operating condition;
Figure 1b a first embodiment of a device according to the invention in operating condition;
Figure 2a a second embodiment of a device according to the invention in non-operating condition;
Figure 2b a second embodiment of a device according to the invention in operating condition;
Figure 3 a top plane view of the upper grid with balls of a device according to a first embodiment of the invention;
Figure 4 a top plane view of the upper grid with balls and products of a device according to a second embodiment of the invention;
Figure 5 a top plane view of the upper grid with balls and products of the device according to a first embodiment of the invention, in operating condition;
Figures 6a-6f from various perspectives a practical embodiment of the device according to an embodiment of the invention.

For a better understanding of the invention the reference numerals, which are identical, are used over all figures.

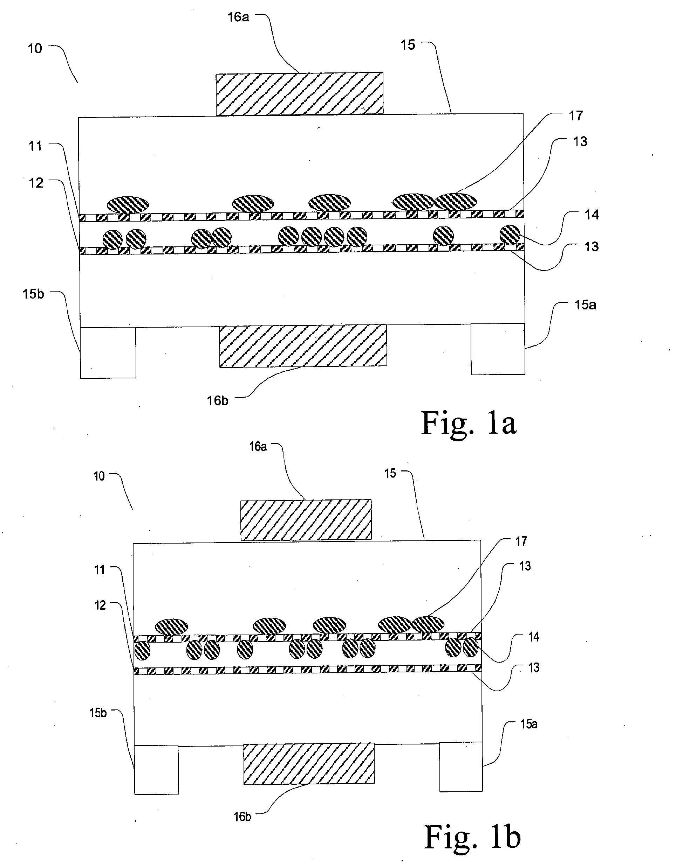

In figure 1a a device 10 is shown from a front view perspective according to a first embodiment of the invention.

An example of such a device according to the invention is a drying device for drying plant seeds. Harvested plant seeds possess a significant percentage of moisture. The germination of seeds and the like depend for a large amount on the amount of moisture present in the seeds. For preserving the seeds the moisture level should be reduced. The way in which this process takes place, the temperature and the dry intensity that are used have a large influence on retaining the seeds germination. For maintaining germination and preserving the seeds the seeds can be dried by known drying devices wherein a large amount of seeds are provided in a air penetrable bag on a grid positioned in a gas flow.

The amount of energy that these state of the art devices consume in order to achieve a desired end result, e.g. moisture level, is significant. A large part of the gas flow circulates in the device but does not pass or cross the seeds to be dried, which result in a higher energy consumption of the device.

In the embodiment disclosed in figure 1a, the gas flow process is improved. Herein a housing 15 is arranged on two pedestals 15a, 15b. The device comprises, amongst others, a top grid 11. The grid has a large amount of openings 13 through which the gas stream or other gas flows such as oxygen, hydrogen, nitrogen and the like can pass. The products 17 to be treated by the gas flow, for example to be dried by a high temperature air flow, are located on top of this top grid 11. These can be individual products such as cauliflowers, but also bags comprising large amounts of small products, such as seeds for example. The products 17 are usually randomly distributed over the upper grid 11.

The gas flow may in such drying devices flow from the top to the bottom, or as in the preferred embodiment, from the bottom to the top of the device. To this end the device comprises gas flow generating means. These comprise at least out of one piece (for example a fan, air pump or air suction device) 16a, 16b or further comprise a second part (this can also be a fan, air pump, suction device or the like).

The drying device 10 as shown in figure 1a further comprises a bottom grate, e.g. grid, 12 for locking in between the top grate 11 and the bottom grate 12 a certain amount of round objects, in this case balls 14. These balls will under the influence of the generated gas flow re-arrange. This means, that when the gas flow is active, the balls can move. In this first embodiment the plane between the two grids is not completely filled with balls. As a result the balls can move in the horizontal plane, and, to a limited extend, move in the vertical plane between the two gratings and thus re-arrange accordingly.

The distance between the two grids or grading 11-12 is substantially equal to or slightly larger than the diameter of the balls 14, so that the balls are to possess a minimum amount of freedom of movement to, in dependence of the gas flow through both grids and the product orientation on the top grid, re-arrange in horizontal and/or vertical direction. It is however desirable to prevent the balls from clamping or getting stuck between the grids and to ensure a certain amount of freedom of movement of the balls.

Because of the minimum spacing of the balls between the two grids 11-12 the balls can only be arranged in a single layer. The minimum vertical freedom of movement prevents one ball to be on top of or above the other. As a result of the freedom of horizontal movement of the balls they will re-arrange themselves when the gas flow is activated. It has been found that on activation of the gas flow, the balls re-arrange themselves in positions in the vicinity of the present products 17, towards positions where there are no products in their vicinity.

The distance between the two grids may preferably not be greater than twice the diameter of the ball, this in order to prevent the balls to be located one above the other in layers between the two grids.

In figure 1b a drying device 10 of figure 1a is shown during operation. Here the gas flow generating means 16a and 16b are activated to trigger a flow of gas through the drying device 10 for drying the products 17 on the top grid 11. This gas flow flows from the bottom gas generating means 16b through the two grids and the products to the top gas generating means 16a, where the gas flow exits the device. During operation of the gas flow the balls 14 will under influence of the gas flow through the grids 11 and 12 re-organize corresponding to the orientation of the products arranged on the top grid 11.

In the vicinity of those openings 13 in the top grid 11 which are covered by a present product 17, the resistance for the gas to pass through the openings is in principle very small. Balls 14 which are located there will be moved by the gas flow to the vicinity of the passage openings 13 in the top grid 11 which are not covered by products 17 present there. Here, the balls 14 will abut the openings 13 in the top grid and at least substantially close them off. This reduced the gas flow/air movement there in respect of the gas flow in the vicinity of the products increase.

This causes the balls 14 to close of the gas flowing initially through the opening passages 13. This is achieved at most positions beneath the top grid 11 where no products 17 are present. Thus, a portion of the gas flow through the grids 11 and 12 is closed en limited to only those openings 13 in the grids above products 17 are present. Thereby, a gas stream is obtained which is concentrated by the passage openings 13 of the grid 11 where products are provided.

This results in a more effective gas flow usage and consumption thereof and leads to an improved drying process.

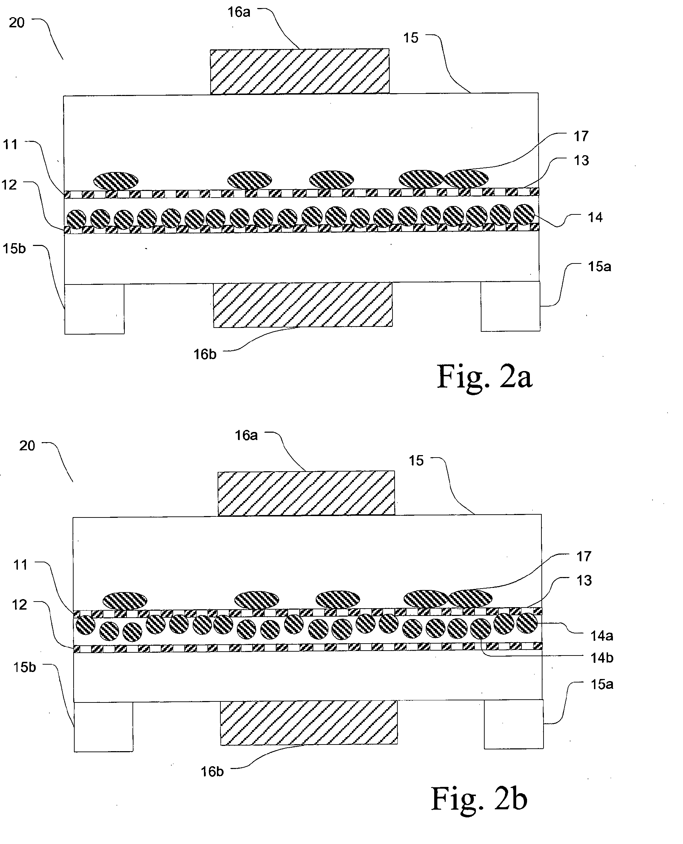

In figure 2a, in another embodiment, a drying apparatus 20 according to the invention is shown. This device consists of a housing 15 comprising a plurality of pedestals 15a, 15b and at least two grids 11, 12. On the upper grid 11 the products to be dried can be placed. This embodiment relates to a similar drying device, however by application of a different gas flow this device can also be used as a cooling device, a freezing installation or a heating system, for example for use as a conservation process or freezing process.

In the embodiment shown in figures 2a and 2b, the space between the two grids 11, 12 in the horizontal plane is completely filled with balls 14. The number of balls 14 is equal to the number of passage openings 13 in the upper grid 11. As a result thereof the balls have only a limited amount of freedom of movement in horizontal direction and in fact abut each other. In vertical direction the balls 14 have limited amount of freedom of movement. The amount of freedom of movement is determined by the distance between the grids and the diameter of the balls. The balls have a maximum vertical freedom of movement up until two times the size of the diameter of the ball.

The balls will be in a non-operating state, thus in absence of a gas flow, be located on the bottom grid 12. During operation, as shown in figure 2b there will be a gas flow which runs from gas generating means 16b to gas outlet 16a. As illustrated above, under the influence of this gas flow those balls 14a at locations of the through holes 13 in the top grid 11 where no products 17 are present, will closed the openings 13.

Since the balls have a larger diameter than the through hole openings 13 of the grid, they will, under the influence of the gas flow press against the through hole openings 13 of the grid and will at least substantially close them off. The through holes of the top and/or the bottom grid can also be not fully round but for example oval shaped, such that the balls will not completely close off the through holes and at least a limited flow of gas along the balls is allowed to pass through the openings. The presence of the openings 13 in the top and bottom grid can also be different, in order for the gas flow to flow in a non straight plane through the both grids.

During operation, as shown in figure 2b, the balls which are present below a through hole 13 in the top grid 11 where there is a product present, will under the influence of the gas flow be brought in a floating state. The balls float between the upper and lower grid, so that the gas flow along the balls can flow through the passage openings 13 of the grid 11. The entire gas flow through the device 15 is thereby concentrated to, or in close proximity to those placed where a product is present on the grid 11.

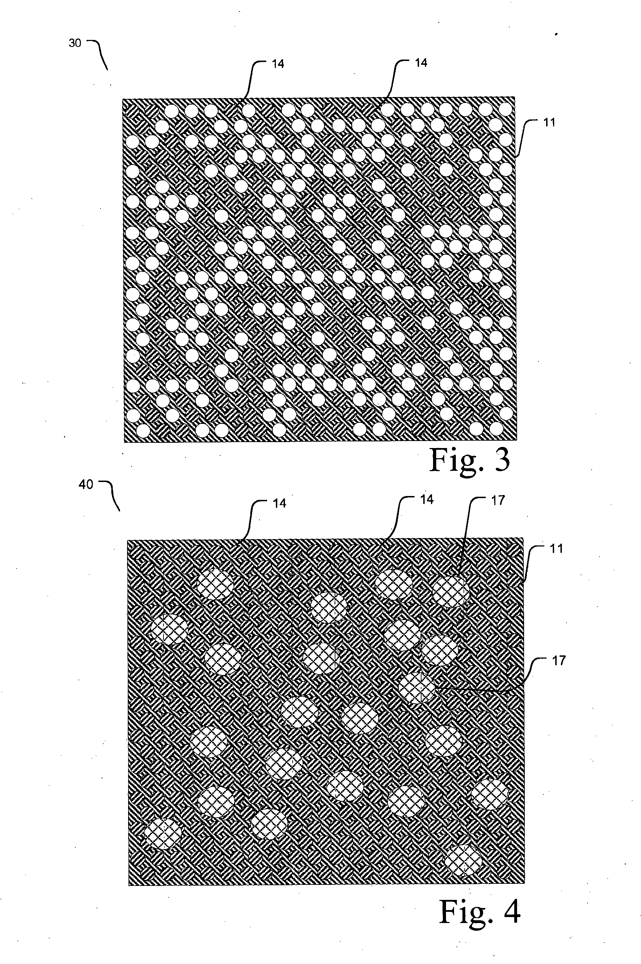

Figure 3 shows, from a top perspective, a first embodiment according to the invention. This embodiment comprises an arrangement of balls 14 below the upper grid 11 during non-operation. In accordance with this embodiment there are less balls 14 below the top grid 11 present and there are air passages 13 in the grid 11. Only a limited amount of through holes can thus be closed by the balls.

In figure 4, from a top perspective, a second embodiment according to the invention is shown. Herein the entire plane is filled with balls and every opening 13 of the grid 11 can be closed off by a corresponding ball 14 present below the opening. In this figure there are different products present on the grid. These products are distributed randomly and can even overlap each other. By activating the gas flow the balls will, according to the invention, close those openings or enable an increased gas flow.

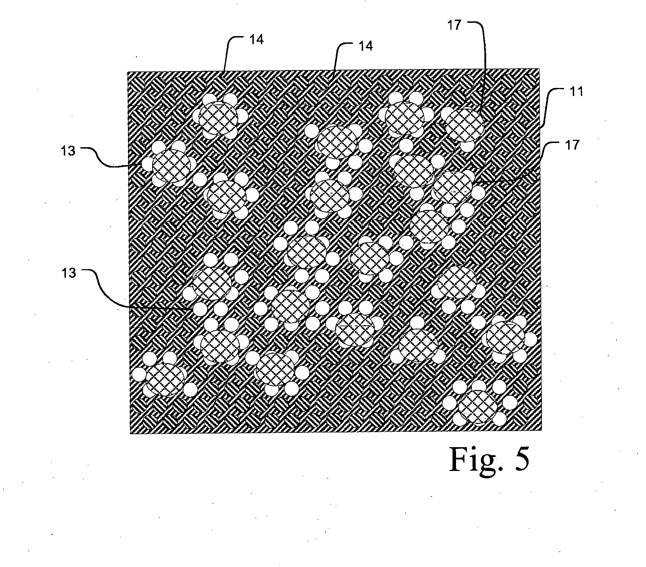

From a top perspective figure 5 shows a first embodiment according to the invention. Herein the balls 14 are re-arranged between the grids 11 and 12 by activating of the gas flow also. At those locations where the to be treated products 17 are present on the grid, there are no balls present.

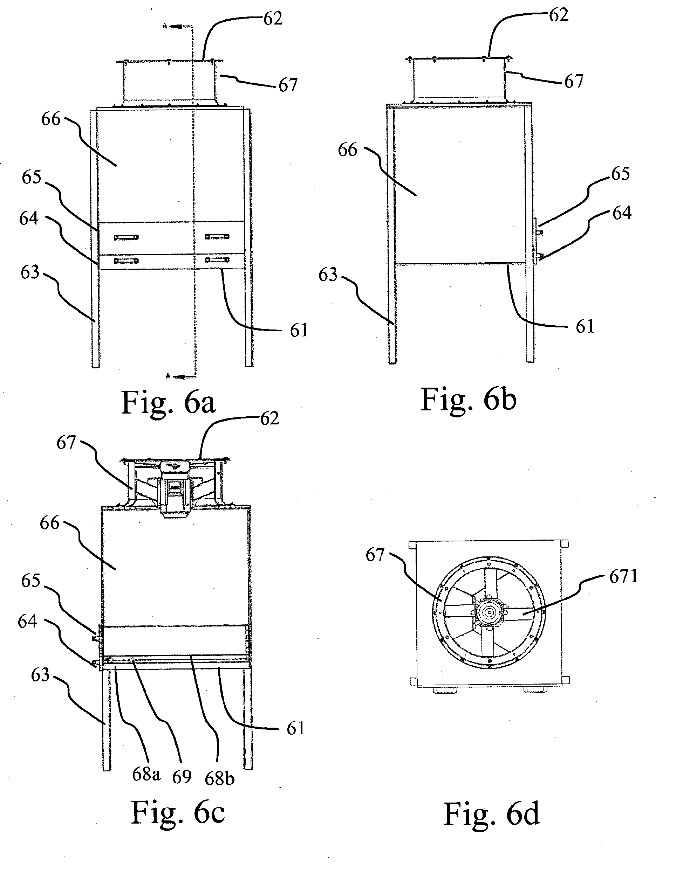

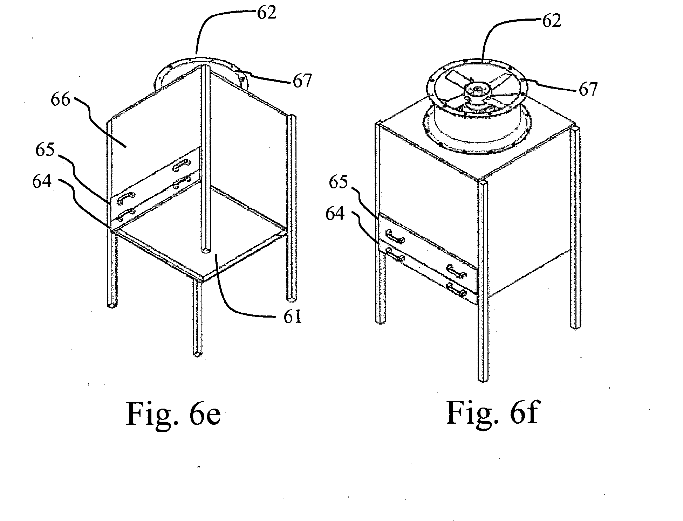

In figure 6 a practical embodiment according to the invention is shown from a front perspective 6a, a side perspective 6b, and at least partly cut away side perspective 6c, top perspective 6d and perspectives 6e, 6f.

This drying device can for instance serve for drying seeds. These seeds can be arranged in the device in an appropriate product tray 65. Such a product tray comprises on its bottom a grid comprising several through holes according to figures 3-5. On this grid the to be dried products can be placed. Below the product tray 65 is a ball tray 64 present in which the balls 14 can be arranged. This tray also comprises a grid according to one the figures 3-5. On this grid the balls can be arranged. The distance between the grid of the product tray and the ball tray is maximum two times the diameter of the balls which are arranged in the ball tray. In an embodiment the product tray comprises at least one grid and herein the balls can also be included between the two grids which both form part of the ball tray 64. For this embodiment the distance between the grid above the balls and the grid below the balls is also maximum two times the diameter of the balls in order to prevent the balls to be arranged in the ball tray in a double layer.

The drying device further comprises a top portion 66 which is placed on a number of legs 63. The top portion 66 is covered with plates or at least in such a way that it makes the drying device airtight. This in order for the gas flow to be realized from the gas supply 61 to the gas outlet 62. This gas flow, which is usually an atmospheric air flow, and can also contain nitrogen or other gasses, is realized by a fan 67 arranged in the top section of the device which fan moves a certain amount of fan propellers 671 thereby sucking air from below the device 61 through the device towards the air outlet 62 where the air exits the device.

In figure 6c it can be seen that the balls 69 in the ball tray 64 are arranged and situated between a first 68a en second 68b grid.

From the above it will be clear to the person skilled in the art that there are variances of the present device existing. The housing may be provided in multiple ways and different dimensions, single or modular. Such further examples will be apparent to the skilled person upon study of the description and are accordingly within the scope of the claims. It will be clear for the skilled person that the scope of protection is not solely determined by the examples given in the forgoing description but are to be defined by the following claims.

## Claims

1. Device for subjecting products (17) to a gas flow, for example, for the purpose of a drying or freezing process, comprising:
a lower and upper grid (12, 11), which are arranged parallel at a certain distance above each other, which lower and upper grid are each provided with a large number of passage openings (13) for the gas flow and in which, during operation, the to the gas flow subject products (17) can be arranged on the upper grid (11);
a plurality of balls (14) which are freely movable between the lower and upper grid, as well as
gas flow generating means (16a, 16b) for generating and for providing the gas flow through the top and bottom grid towards the products,
**characterised in that** the distance between the lower and upper grid is substantial equal to the diameter of the balls (14), such that the balls are arranged in a single layer between the grids.

2. Device according to claim 1, wherein the number of balls (14) at least substantially correspond to the amount of passage openings (13) in the upper grid.

3. Device according to claim 1 or 2, wherein the device further comprises a heating element for heating the gas flow.

4. Device according to claim 1 or 2, wherein the device further comprises a cooling element for cooling the gas flow.

5. Device according to one of the preceding claims, wherein the products are movable over the top grid by way of a product stream.

6. Device according to one of the preceding claims, wherein the device further comprises control means for controlling the gas flow.

7. Device according to claim 6, wherein the control means control the air flow in dependence of the product stream.

8. Device according to more or more of the preceding claims, wherein the gas flow consists of one or more of the group comprising air, oxygen, nitrogen, hydrogen or a combination thereof.

## Patentansprüche

1. Vorrichtung, um Produkte (17) einem Gasstrom auszusetzen, beispielsweise für einen Trocknungs- oder Gefrierprozess, mit:
einem unteren und einem oberen Gitter (12, 11), die in einem bestimmten Abstand parallel übereinander angeordnet sind, wobei das untere und das obere Gitter jeweils mit einer großen Anzahl an Durchlassöffnungen (13) für den Gasstrom versehen sind und bei denen während des Betriebs die dem Gasstrom ausgesetzten Produkte (17) auf dem oberen Gitter (11) angeordnet sein können,
mehreren Kugeln (14), die zwischen dem unteren und dem oberen Gitter frei bewegbar sind, und
gassstromerzeugenden Mitteln (16a, 16b) zur Erzeugung und zur Bereitstellung des Gasstroms durch das obere und das untere Gitter zu den Produkten hin,
**dadurch gekennzeichnet, dass** der Abstand zwischen dem unteren und dem oberen Gitter im Wesentlichen dem Durchmesser der Kugeln (14) entspricht, so dass die Kugeln in einer einzigen Schicht zwischen den Gittern angeordnet sind.

2. Vorrichtung nach Anspruch 1, wobei die Anzahl der Kugeln (14) im Wesentlichen zumindest der Menge an Durchgangsöffnungen (13) im oberen Gitter entspricht.

3. Vorrichtung nach Anspruch 1 oder 2, wobei die Vorrichtung ferner ein Heizelement zum Erwärmen des Gasstroms aufweist.

4. Vorrichtung nach Anspruch 1 oder 2, wobei die Vorrichtung ferner ein Kühlelement zum Kühlen des Gasstroms aufweist.

5. Vorrichtung nach einem der vorhergehenden Ansprüche, wobei die Produkte durch einen Produktfluss über dem oberen Gitter bewegbar sind.

6. Vorrichtung nach einem der vorhergehenden Ansprüche, wobei die Vorrichtung ferner Steuermittel zum Steuern des Gasstroms aufweist.

7. Vorrichtung nach Anspruch 6, wobei die Steuermittel den Luftstrom in Abhängigkeit von dem Produktfluss steuern.

8. Vorrichtung nach mindestens einem der vorhergehenden Ansprüche, wobei der Gasstrom aus mindestens einem Element aus der Gruppe besteht, die Luft, Sauerstoff, Stickstoff, Wasserstoff oder eine Kombination daraus umfasst.

## Revendications

1. Dispositif pour soumettre des produits (17) à un écoulement de gaz, par exemple pour le but d'un processus de séchage ou de congélation, comprenant :
des grilles inférieure et supérieure (12, 11) qui sont agencées en parallèle à une certaine distance l'une au-dessus de l'autre, lesquelles grilles inférieure et supérieure sont chacune prévues avec un grand nombre d'ouvertures de passage (13) pour l'écoulement de gaz et dans lequel, pendant le fonctionnement, les produits (17) soumis à l'écoulement de gaz peuvent être agencés sur la grille supérieure (11) ;
une pluralité de billes (14) qui sont librement mobiles entre la grille inférieure et la grille supérieure, ainsi que
des moyens de génération d'écoulement de gaz (16a, 16b) pour générer et pour fournir l'écoulement de gaz à travers les grilles supérieure et inférieure vers les produits,
**caractérisé en ce que** la distance entre les grilles inférieure et supérieure est sensiblement égale au diamètre des billes (14), de sorte que les billes sont agencées sur une seule couche entre les grilles.

2. Dispositif selon la revendication 1, dans lequel le nombre de billes (14) correspond au moins sensiblement à la quantité d'ouvertures de passage (13) dans la grille supérieure.

3. Dispositif selon la revendication 1 ou 2, dans lequel le dispositif comprend en outre un élément de chauffage pour chauffer l'écoulement de gaz.

4. Dispositif selon la revendication 1 ou 2, dans lequel le dispositif comprend en outre un élément de refroidissement pour refroidir l'écoulement de gaz.

5. Dispositif selon l'une des revendications précédentes, dans lequel les produits sont mobiles sur la grille supérieure au moyen d'un courant de produit.

6. Dispositif selon l'une des revendications précédentes, dans lequel le dispositif comprend en outre des moyens de commande pour commander l'écoulement de gaz.

7. Dispositif selon la revendication 6, dans lequel les moyens de commande, commandent l'écoulement d'air en fonction du courant de produit.

8. Dispositif selon une ou plusieurs des revendications précédentes, dans lequel l'écoulement de gaz se compose d'un ou de plusieurs éléments du groupe comprenant l'air, l'oxygène, l'azote, l'hydrogène ou leur combinaison.
